# FASCICULE DE BREVET EUROPEEN

(11) **EP 2 322 428 B1**
(45) Date de publication et mention de la délivrance du brevet: **17.04.2013**
(21) Numéro de dépôt: 10191447.1
(22) Date de dépôt: 16.11.2010
(51) Int. Cl.: B64C 21/00, G01M 11/08, H04L 12/403

(54) **Dispositif de surveillance de bon fonctionnement d'une pluralité de dispositifs, notamment d'actionneurs**
Vorrichtung zur Überwachung des reibungslosen Funktionierens einer Mehrzahl von Vorrichtungen, insbesondere Stellglieder
Device for monitoring the correct operation of a plurality of devices, in particular actuators

(30) Priorité: 17.11.2009 FR 0905509
(43) Date de publication de la demande: 18.05.2011
(73) Titulaire: Thales, 92200 Neuilly Sur Seine (FR)
(72) Inventeur: Guichard, M. Philippe, 26120, Chabeuil (FR)
(74) Mandataire: Lucas, Laurent Jacques

(56) Documents cités:
- EP-A2- 1 995 171
- US-A- 5 493 390

## Description

La présente invention concerne un dispositif de surveillance de bon fonctionnement d'une pluralité de dispositifs répartis dans une structure, notamment d'actionneurs. Elle s'applique à la surveillance du bon fonctionnement d'équipements et de systèmes, notamment mis en oeuvre dans des véhicules, et plus particulièrement dans des aéronefs.

Il existe, notamment dans le domaine des transports, un nombre croissant de systèmes embarqués comprenant une pluralité d'actionneurs, répartis dans une structure, parfois en grand nombre. Le développement d'actionneurs de dimensions de plus en plus réduites permet une meilleure intégration de ceux-ci, et partant un accroissement de leur nombre au sein d'un système donné. Dans le domaine aéronautique par exemple, il est souhaitable qu'un nombre toujours accru d'actionneurs de différents types soient mis en oeuvre dans les aéronefs, afin de permettre une gestion optimisée du vol par des actions précisément localisées. Lesdits actionneurs sont activés sur la base de mesures provenant d'une pluralité de capteurs de paramètres physiques. Ces ensembles de capteurs et d'actionneurs participent au vol de l'aéronef, en optimisant le bilan énergétique entre autres fonctions. Enfin, un deuxième ensemble de capteurs assure la veille sur l'état de santé détaillé et en temps réel du véhicule, habituellement désignée selon l'expression anglo-saxonne "Health Monitoring" ; dans ce cas, les capteurs participent au renforcement de la sécurité du vol, ainsi qu'à des opérations de maintenance optimisées. Ainsi, une aile d'aéronef perfectionnée est prévue pour contenir une nombreuse population de micro-équipements dispersés dans celle-ci. Une telle aile peut en effet comprendre une pluralité - plusieurs dizaines voire centaines - de micro-actionneurs permettant de contrôler en des points précis de la surface de l'aile, les écoulements d'air. De la sorte, un écoulement d'air turbulent localisé sur une partie de la surface de l'aile, détecté par un capteur prévu à cet effet, peut être rectifié en un écoulement laminaire, par l'intermédiaire d'un ou plusieurs micro-actionneurs situés à proximité.

Il est décrit maintenant des types d'actionneurs choisis comme exemples pour permettre une description claire de l'invention : les actionneurs de couche-limite. L'invention peut être mise en oeuvre avec tous les types d'actionneurs connus ou à venir, à condition que lesdits actionneurs aient un effet physique dont la signature thermique et/ou acoustique soit mesurable, ainsi que cela est explicité plus en détails ci-après.

Les micro-actionneurs susvisés peuvent par exemple être des micro-actionneurs fluidiques, encore dénommés actionneurs à jet synthétique par plasma, communément désignés selon la terminologie anglo-saxonne "Plasma Synthetic Jet Actuators" ou selon le sigle y correspondant "PSJA". Les actionneurs de type PSJA se trouvent sous la forme de petites cavités contenant un plasma, un arc électrique chauffant le contenu de la cavité pour produire une décharge de l'air contenu dans la cavité, suivie d'une détente. Les actionneurs de type PSJA peuvent se présenter sous la forme de composants discrets, ou bien sous la forme de composants de type systèmes micro-électromécaniques, communément désignés selon l'acronyme de "MEMS" correspondant à la terminologie anglo-saxonne "Micro-Electro-Mechanical Systems", c'est-à-dire micro-usinés, par exemple de manière collective avec d'autres composants ou circuits.

Un actionneur de type PSJA peut être activé périodiquement avec une certaine fréquence dans le but d'émuler un générateur de vortex mécanique. L'air sort et rentre alors d'un actionneur de type PSJA de façon alternée, ce qui perturbe l'écoulement de l'air à sa proximité, permettant de réduire le décollement de la couche limite. On peut citer également des micro-actionneurs de type piézo-électrique assemblés en batteries, et répartis sur la surface de l'aile, capables d'engendrer à la demande une déformation de la surface de celle-ci.

On peut citer également des micro-actionneurs à base de micromoteurs de type MEMS, ou encore des actionneurs à alliages à mémoire de forme, ou de type muscles artificiels.

Il est à remarquer qu'un système peut comprendre une pluralité d'équipements d'un des types précités, mais également une pluralité hétérogène de capteurs de différents types.

Il est souhaitable, par exemple pour une aile comprenant une pluralité de micro-actionneurs des types précités, que la défaillance partielle ou totale de chacun des actionneurs puisse être détectée. En effet, la défaillance d'un seul actionneur peut avoir des conséquences fâcheuses vis-à-vis de l'écoulement aérodynamique autour de toute la surface de l'aile, un effet de contamination pouvant rapidement étendre un écoulement turbulent initialement localisé, à la totalité de la surface de l'aile.

Il est possible d'adjoindre à chaque micro-actionneur, un dispositif de surveillance intégrée mesurant directement le bon fonctionnement de l'actionneur. Néanmoins une telle solution peut s'avérer pénalisante en pratique, car :
1) elle suppose une complexification des micro-actionneurs ;
2) une telle complexification notamment, entraîne un coût excessif de la fonction de surveillance, relativement au coût du microsystème auquel elle est rapportée ;
3) l'ajout d'un dispositif de surveillance intégrée peut être pénalisant en terme d'encombrement, le dispositif de surveillance offrant nécessairement un encombrement significatif ;
4) de la même manière, l'ajout d'un dispositif de surveillance à chaque micro-actionneur a pour conséquence une masse plus élevée, pénalisante vis-à-vis des performances de vol de l'aéronef ;
5) il est nécessaire que chaque dispositif de surveillance soit alimenté en énergie ;
6) en tout état de cause, il est nécessaire de mettre en oeuvre une connectique rendue plus complexe, afin de relier électriquement et fonctionnellement chaque dispositif de surveillance au micro-actionneur associé, ainsi que les microsystèmes ainsi constitués avec un dispositif centralisé de gestion ;
7) chaque dispositif de surveillance présente lui-même une susceptibilité vis-à-vis de l'environnement ;
8) la qualité de la couverture du test par ledit dispositif de surveillance intégré est limitée dans le cas général, seulement certains organes de l'actionneur étant surveillés, plutôt que le déroulement effectif de son action par ses conséquences physiques.

Le document US 5 493 390 décrit un système permettant de surveiller et diagnostiquer des composants ou structures grâce un réseau de capteurs reliés par fibre optique.

Un but de la présente invention est de pallier au moins les inconvénients précités, en proposant un dispositif de surveillance permettant de diagnostiquer le bon fonctionnement d'une pluralité d'équipements tels que des actionneurs, le dispositif de surveillance étant à la fois simple, peu contraignant vis-à-vis de la masse du système dans lequel il est mis en oeuvre.

Un avantage de l'invention est que le dispositif de surveillance est commun à une pluralité d'équipements, ces équipements pouvant aussi bien être de même type, ou bien de types hétérogènes.

Un autre avantage de l'invention est que le dispositif de surveillance n'ajoute aucune contrainte de non-robustesse par rapport à l'environnement thermique, mécanique et électrique du système dans lequel il est mis en oeuvre.

Encore un autre avantage de l'invention est que le dispositif de surveillance offre une pénalité en fiabilité nulle vis-à-vis du système dans lequel il est mis en oeuvre.

Un autre avantage de l'invention réside dans le fait que le dispositif de surveillance permet d'assurer une bonne couverture des modes de défaillance des micro-actionneurs auxquels il est associé.

A cet effet, l'invention a pour objet un dispositif de surveillance d'une pluralité de micro-actionneurs, caractérisé en ce qu'il comprend une fibre optique comprenant une pluralité de capteurs, chaque capteur étant disposé à proximité d'un micro-actionneur, et présentant des propriétés optiques variant en fonction d'au moins un paramètre environnemental, le dispositif de surveillance comprenant également un dispositif interrogateur pour réseau de fibre optique comprenant au moins un émetteur et un récepteur, et des moyens de traitement aptes à moduler la fréquence du signal optique émis par l'émetteur de manière à sélectionner le capteur à proximité d'un micro-actionneur donné, et à comparer le signal optique reçu à un gabarit caractéristique du bon fonctionnement du micro-actionneur.

Selon un mode de réalisation de l'invention, le dispositif de surveillance est caractérisé en ce que la fibre optique est de type monomode, et les capteurs sont constitués par un réseau de capteurs à fibre optique utilisant des réseaux d'interférence de Bragg, les moyens de traitement comparant le signal optique reçu à une signature thermique du micro-actionneur.

Selon un mode de réalisation de l'invention, le dispositif de surveillance est caractérisé en ce que la fibre optique est de type monomode, et les capteurs sont formés par un réseau de Bragg, les moyens de traitement comparant le signal optique reçu à une signature en pression du micro-actionneur.

Selon un mode de réalisation de l'invention, le dispositif de surveillance est caractérisé en ce que les micro-actionneurs sont des micro-actionneurs à jet synthétique par plasma.

Selon un mode de réalisation de l'invention, le dispositif de surveillance est caractérisé en ce que les micro-actionneurs à jet synthétique par plasma comprennent deux électrodes planaires réalisées de part et d'autre d'un substrat diélectrique.

Selon un mode de réalisation de l'invention, le dispositif de surveillance est caractérisé en ce que la fibre optique est disposée dans la structure du substrat diélectrique.

Selon un mode de réalisation de l'invention, le dispositif de surveillance est caractérisé en ce que la fibre optique est réalisée dans une cavité formée dans le substrat diélectrique, le capteur étant réalisé par des couches déposées de matière formant les franges d'un réseau d'interférence.

Selon un mode de réalisation de l'invention, le dispositif de surveillance est caractérisé en ce que les micro-actionneurs sont des actionneurs de type piézo-électrique.

Selon un mode de réalisation de l'invention, le dispositif de surveillance est caractérisé en ce que les micro-actionneurs sont des micromoteurs.

Selon un mode de réalisation de l'invention, le dispositif de surveillance est caractérisé en ce que les micro-actionneurs sont des actionneurs à alliage à mémoire de forme.

Selon un mode de réalisation de l'invention, le dispositif de surveillance est caractérisé en ce que les micro-actionneurs sont des actionneurs de type muscle artificiel.

Selon un mode de réalisation de l'invention, le dispositif de surveillance est caractérisé en ce que les micro-actionneurs forment une population hétérogène d'actionneurs de différents types parmi les types suivants : micro-actionneurs à jet synthétique par plasma, actionneurs piézo-électriques, micromoteurs, actionneurs à alliage à mémoire de forme, muscles artificiels.

Selon un mode de réalisation de l'invention, le dispositif de surveillance est caractérisé en ce qu'il comprend des moyens de synchronisation de l'analyse comparative des signaux, avec les commandes d'actionnement des micro-actionneurs.

La présente invention a également pour objet une aile d'aéronef, caractérisée en ce qu'un dispositif de surveillance tel que décrit ci-dessus surveille une pluralité d'actionneurs disposés au niveau de la surface de l'aile, les capteurs étant disposés le long de la fibre optique disposée dans la matière de l'aile, chacun des capteurs étant disposé à proximité d'un actionneur.

D'autres caractéristiques et avantages de l'invention apparaîtront à la lecture de la description, donnée à titre d'exemple, faite en regard des dessins annexés qui représentent :
- la figure 1, une série de vues en coupe d'un micro-actionneur de type PSJA dans différentes phases caractéristiques de son fonctionnement ;
- la figure 2, une courbe illustrant la signature thermique caractéristique du bon fonctionnement d'un micro-actionneur ;
- la figure 3, une vue en coupe illustrant le positionnement d'un capteur unitaire vis-à-vis d'un micro-actionneur de type PSJA, dans un exemple de mode de réalisation de l'invention ;
- les figures 4a et 4b, respectivement une vue en coupe et une vue de dessus illustrant le positionnement d'une pluralité de capteurs unitaires vis-à-vis d'une pluralité de micro-actionneurs de type PSJA, dans un exemple de mode de réalisation de l'invention ;
- les figures 5a et 5b, le positionnement d'un capteur unitaire vis-à-vis d'un micro-actionneur de type PSJA micro-usiné, dans un exemple de mode de réalisation de l'invention, respectivement dans une vue en coupe latérale et une vue de dessus ;
- la figure 6, en synoptique, un diagramme illustrant un dispositif de surveillance selon un exemple de mode de réalisation de l'invention.

La présente invention utilise une signature, appréciable via la mesure de paramètres physiques caractéristiques du fonctionnement des actionneurs surveillés.

Des dispositifs de détection d'anomalies de fonctionnement d'un dispositif sont en eux-mêmes connus, qui utilisent la détection de phénomènes physiques caractéristiques du disfonctionnement du dispositif, par exemple des vibrations anormales. Cette surveillance est de nature continue.

Le dispositif selon l'invention utilise une comparaison de la conséquence physique attendue suite au fonctionnement de l'actionneur à la conséquence physique réellement mesurée. On entend par conséquence physique l'évolution de paramètres physiques tels que température ou la vibration caractéristique à proximité immédiate de l'actionneur. Cette comparaison est effectuée à chaque mise en fonction de l'actionneur.

Le dispositif selon l'invention utilise un réseau de capteurs permettant de surveiller une pluralité d'actionneurs indépendamment les uns des autres.

Le dispositif selon l'invention comprend par exemple une unité de traitement des mesures du réseau de capteurs qui assure le fonctionnement des capteurs d'une part, le traitement des mesures de manière à délivrer des informations sur le bon fonctionnement d'autre part. L'unité de traitement comporte par exemple un module d'acquisition des signaux en provenance des capteurs, un module de traitement du signal, un module de transmission. L'unité de traitement est d'une technologie quelconque connue pour ce type d'équipement.

Le réseau de capteurs selon l'invention peut être constitué de capteurs électriques classiques de type connu ou, préférentiellement, de capteurs de nature optique. Il est connu de l'état de la technique antérieur des capteurs ménagés sur une fibre optique dans laquelle sont formés des réseaux d'interférence dénommés « réseaux de Bragg ». Une seule fibre peut comporter de manière connue une pluralité de capteurs formant un réseau, les capteurs étant également désignés "noeuds", ou encore "noeuds-capteurs". Un dispositif de surveillance selon l'invention peut comporter une telle fibre optique le long de laquelle sont répartis des noeuds formant les capteurs. A chacun de ces noeuds correspond un micro-actionneur à surveiller. Un tel capteur de type connu permet de traiter les noeuds de manière indépendante.

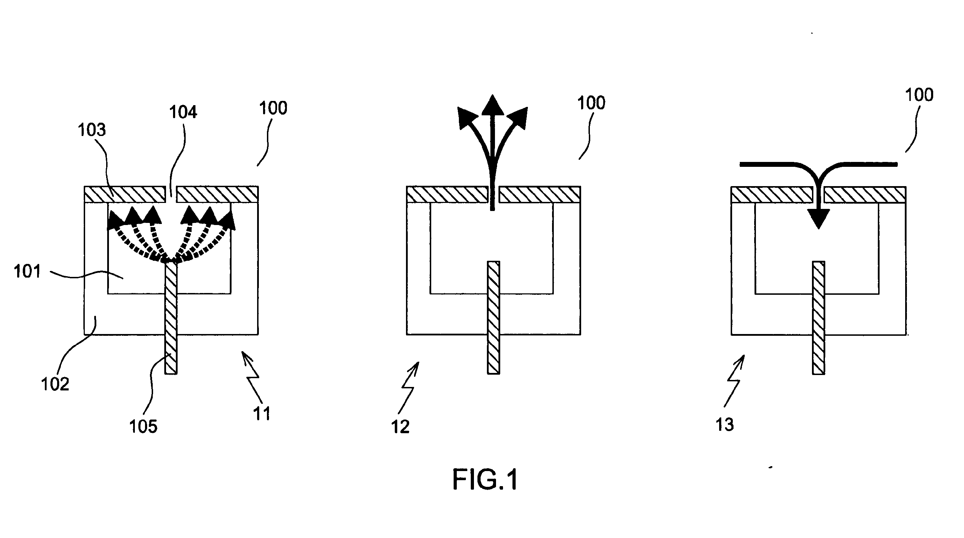

La figure 1 présente une série de vues en coupe d'un micro-actionneur de type PSJA dans différentes phases caractéristiques de son fonctionnement.

Dans l'exemple illustré par la figure 1, un micro-actionneur 100 de type PSJA présenté dans trois phases 11, 12, 13 caractéristiques de son fonctionnement, comprend une cavité 101 ceinte par une armature 102, couverte par une première électrode 103 dans laquelle est réalisé un orifice 104, le fond de l'armature 102 étant traversé par une seconde électrode 105 affleurant dans le fond de la cavité 101.

Lors de la première phase 11, un dépôt d'énergie est réalisé, en appliquant une importante différence de potentiels entre la première électrode 103 et la seconde électrode 105. L'air contenu dans la cavité 101 est ainsi chauffé.

Lors de la deuxième phase 12, une différence de potentiel est appliquée entre la première électrode 103 et la seconde électrode 105. Le gradient électrique ainsi présent dans le volume compris dans la cavité 101 entraîne une éjection de l'air ionisé (ou plasma) via l'orifice 104.

Lors de la troisième phase 13, aucune différence de potentiels n'est appliquée entre la première électrode 103 et la seconde électrode 105, et le volume compris dans la cavité 101 se remplit à nouveau d'air non ionisé dont la température est sensiblement la température ambiante.

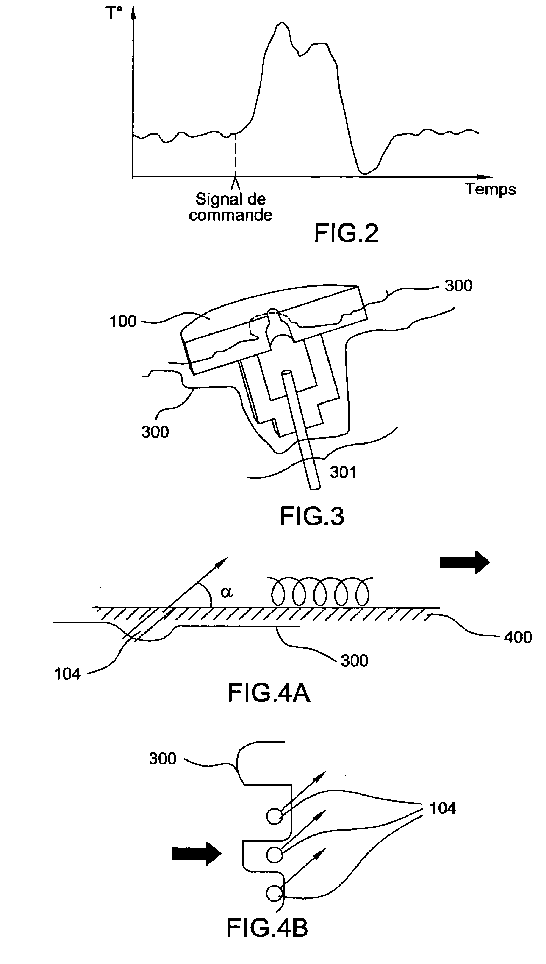

La figure 2 présente une courbe illustrant la signature thermique caractéristique du bon fonctionnement d'un micro-actionneur.

La courbe représente un exemple de l'évolution de la température au niveau d'un micro-actionneur 100, en référence à la figure 1, en fonction du temps, au cours d'un cycle de fonctionnement du micro-actionneur 100.

Il est à noter que la première phase 11 de fonctionnement du micro-actionneur 100, en référence à la figure 1, s'accompagne d'une augmentation de la température de l'air contenu dans la cavité 101 ; la température suit alors de manière typique, une diminution lors des deuxième et troisième étapes 12, 13. D'une manière similaire, la pression de l'air contenu dans la cavité 101 connaît une évolution similaire au cours des trois phases 11, 12, 13. Ainsi, en fonctionnement, un micro-actionneur 100 de type PSJA présente des évolutions caractéristiques de la température et de la pression de l'air contenu dans la cavité 101. Pour la suite, ces évolutions caractéristiques de la température et de la pression sont respectivement désignées signature thermique et signature en pression. De la même manière, des actionneurs d'autres types auxquels l'invention est applicable présentent des signatures caractéristiques en fonctionnement. Tout fonctionnement atypique d'un actionneur, par exemple en cas de défaillance, se traduit par une signature différente de la signature caractéristique de son bon fonctionnement.

La présente invention propose de détecter la signature thermique ou signature en pression d'un actionneur et de la comparer à la signature caractéristique de son bon fonctionnement. La signature thermique peut être détectée par transmission de la chaleur dans les parois et l'environnement immédiat de la structure d'accueil de l'actionneur. La signature en pression peut être détectée par transmission vibratoire, ou acoustique, à travers la structure de l'actionneur et l'environnement immédiat de la structure d'accueil de l'actionneur. On parle ainsi de signature vibratoire ou acoustique.

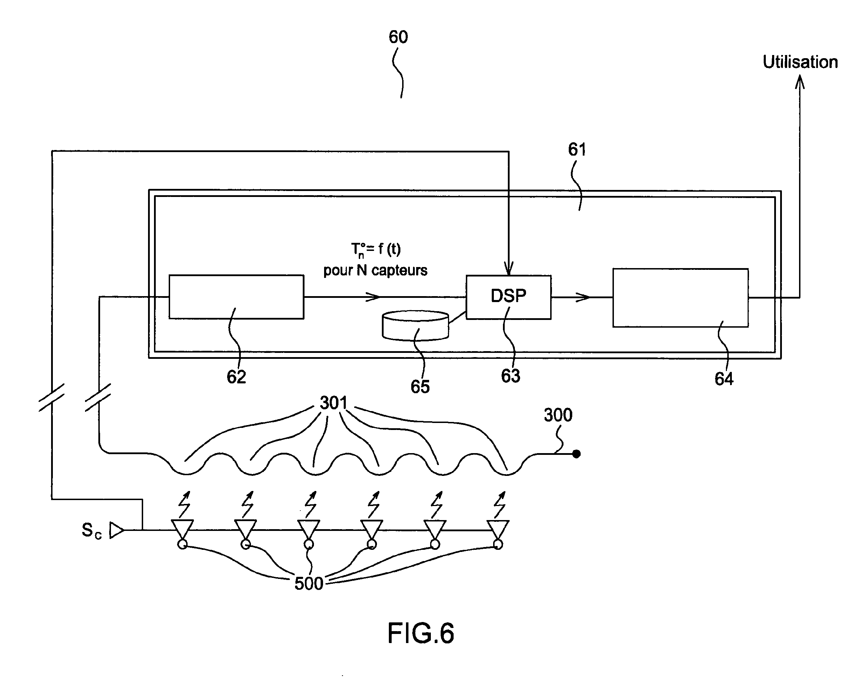

La signature thermique ou vibratoire du bon fonctionnement d'un actionneur peut être caractérisée de manière préalable, et un gabarit peut être défini. Ce gabarit peut-être mémorisé dans une unité dédiée, pour chaque actionneur ou chaque type d'actionneur. Un exemple de structure globale de dispositif de surveillance est décrit en détails ci-après en référence à la figure 6.

Dans un exemple de mode de réalisation préférentiel de l'invention, des capteurs de nature optique peuvent être disposés le long d'une fibre optique dite à réseaux de Bragg. Une fibre à réseaux de Bragg est en elle-même connue de l'état de la technique. Le fonctionnement de ce type de capteur est en lui-même connu, et par conséquent il n'est pas décrit en détails dans la présente description. Les caractéristiques importantes aux fins de l'invention, pour ce type de capteur sont :
- les noeuds sensibles ou noeuds-capteurs, c'est-à-dire les capteurs indépendants disposés le long de la fibre optique doivent être accessibles individuellement par le traitement du signal d'un dispositif interrogateur ;
- les noeuds sensibles et la fibre optique à partir du dispositif interrogateur doivent être de nature optique, sans que des phénomènes de conduction électrique n'interviennent ;
- les noeuds sensibles peuvent par exemple être sensibles à la température ou bien aux vibrations, selon leur géométrie et celle de leur structure d'accueil.

Par exemple, une fibre optique de type monomode comprend des réseaux d'interférences gravés en son sein, sous la forme de franges qui réfléchissent chacun une longueur d'onde propre très précise. De tels réseaux d'interférences présentent une grande sensibilité, notamment aux variations de température ; en effet, si la fibre optique est localement étirée ou contractée, alors la distance entre les franges est respectivement diminuée ou augmentée, et la longueur d'onde réfléchie est modifiée en conséquence. Or, si chaque noeud sensible de la fibre optique est maintenu dans un système peu soumis aux contraintes, par exemple noyée dans la structure de l'aile, alors la cause principale de son étirement ou de sa contraction est la variation de température.

Un dispositif de surveillance peut par exemple comprendre un émetteur laser émettant dans la fibre optique le long de laquelle sont disposées des capteurs formant un réseau de Bragg. L'émission peut être réalisée sur une plage donnée de longueurs d'onde ; une interrogation peut alors être réalisée en faisant varier la fréquence du laser. De la sorte, une étude de temps de propagation peut permettre de localiser précisément l'endroit où l'onde est réfléchie le long de la fibre optique, et partant le noeud capteur depuis lequel un signal est détecté. Une analyse du signal optique reçue par un récepteur permet de quantifier les variations de température au niveau de ce capteur. Un capteur donné peut être sélectionné par un choix judicieux de la fréquence du laser, une fréquence du faisceau laser pouvant être reflétée par le capteur choisi, alors que tous les autres capteurs y sont transparents.

Il est à remarquer que d'une manière similaire, il est possible de quantifier, éventuellement par l'intermédiaire de filtres, transducteurs et/ou d'amplificateurs spécifiques, des variations de pression, ou encore des ondes acoustiques, électromagnétiques, voire des déformations mécaniques. Il est ainsi possible, avantageusement, d'assurer via un dispositif tel que décrit ci-dessus, la surveillance d'une population hétérogène d'équipements. De manière préférentielle, les noeuds capteurs doivent être disposés à proximité immédiate des actionneurs ou autres équipements à surveiller, de façon à ce que l'atténuation du signal à mesurer soit la plus faible possible, ainsi que la constante de temps liée au temps de propagation du signal. On entend ici par proximité immédiate, une distance qui correspond à une atténuation acceptable pour la détection et la localisation de la propagation thermique ou acoustique, selon le type de signature choisie.

Il est également possible que les capteurs soient de nature autre, par exemple de nature électrique ou piézoélectrique Ainsi, le dispositif selon l'invention peut également être réalisé avec un ensemble de thermomètres traditionnels électriques.

Des exemples de positionnement d'une fibre optique à proximité d'actionneurs, ou dans un réseau d'actionneurs, sont illustrés par les figures 3 à 5.

La figure 3 présente une vue en coupe, en perspective, illustrant le positionnement d'un capteur unitaire vis-à-vis d'un micro-actionneur de type PSJA, dans un exemple de mode de réalisation de l'invention.

Dans l'exemple illustré par la figure 3, une fibre optique 300 peut être disposée sous le micro-actionneur 100, de manière à ce qu'un noeud capteur 301 contourne la cavité 101, en restant à proximité de celle-ci. Ce mode de réalisation permet par exemple une maintenance aisée, avec la possibilité de remplacer un micro-actionneur 100 défectueux, la fibre 300 restant en place, et étant par exemple noyée dans une structure d'accueil.

Dans un mode de réalisation alternatif, il est également possible que la fibre 300 soit disposée dans la structure de la première électrode du micro-actionneur 100.

Les figures 4a et 4b présentent respectivement une vue en coupe et une vue de dessus illustrant le positionnement d'une pluralité de capteurs unitaires vis-à-vis d'une pluralité de micro-actionneurs de type PSJA, dans un exemple de mode de réalisation de l'invention.

Dans l'exemple illustré par la figure 4a, une partie de l'extrados 400 d'une aile d'aéronef est représentée dans une vue en coupe latérale. Un micro-actionneur de type PSJA peut être noyé dans la structure de l'aile, de façon à ce que son orifice 104 soit agencé de manière à ce que le filet d'air expulsé par le micro-actionneur, forme avec la tangente à la surface de l'aile, un angle α.

La fibre optique 300 peut être noyée dans la structure de l'aile, et un noeud capteur peut être disposé à proximité du micro-actionneur, en contournant l'orifice 104.

Ainsi que cela est illustré par la figure 4b, une pluralité de micro-actionneurs peut être disposée, par exemple en ligne droite, le long de l'extrados de l'aile. La même fibre optique 300 peut être disposée de manière à présenter des noeuds capteurs à proximité de chacun des orifices 104 des différents micro-actionneurs, tout en contournant les orifices 104.

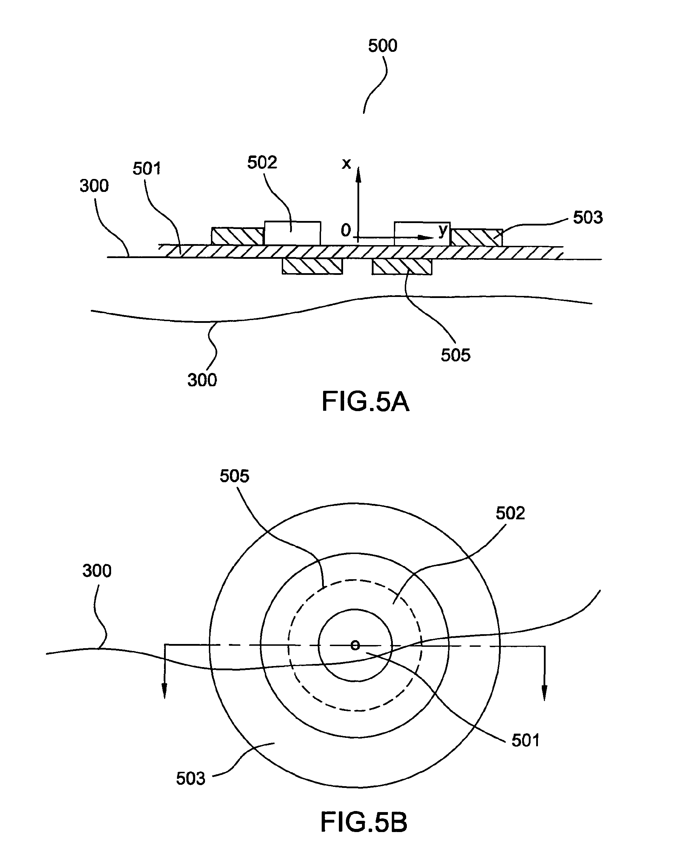

Les figure 5a et 5b présentent respectivement une vue en coupe et une vue de dessus illustrant le positionnement d'un capteur unitaire vis-à-vis d'un micro-actionneur de type PSJA micro-usiné, dans un exemple de mode de réalisation de l'invention.

En référence à la figure 5a, un micro-actionneur 500 de type PSJA peut également, selon une technique en elle-même connue de l'état de la technique, être réalisé par une technique de micro-usinage, par deux couches métalliques formant deux électrodes annulaires 503 et 505, respectivement au-dessus et au-dessous d'un substrat diélectrique 501.

En référence à la figure 5b, les électrodes 503 et 505 peuvent être deux anneaux planaires dont les centres sont alignés sur un axe vertical. L'air ionisé ou plasma peut alors être compris dans une zone 502 située au-dessus de la surface du substrat 501, sensiblement annulaire, et située à l'intérieur de la première électrode annulaire 503 et au-dessus de la seconde électrode annulaire 505.

Il est alors possible de disposer la fibre optique 300 de manière qu'un noeud capteur soit situé à proximité d'une zone 502 occupée par le plasma : par exemple en noyant la fibre dans le substrat diélectrique 501, ou bien en la noyant dans la structure située en-dessous du substrat diélectrique 501, qui peut par exemple être la structure d'une aile d'aéronef.

Dans un mode de réalisation de l'invention, la fibre optique 300 peut également être réalisée directement au sein du substrat diélectrique 501, par exemple par une cavité au sein de laquelle sont micro-déposées des couches de matériaux formant les franges d'un réseau d'interférence, afin de constituer la pluralité de capteurs.

La figure 6 présente, en synoptique, un diagramme illustrant un dispositif de surveillance selon un exemple de mode de réalisation de l'invention.

Dans un exemple de mode de réalisation préférentiel de l'invention, un dispositif de surveillance 60 peut comprendre une unité de traitement 61. L'unité de traitement 61 peut comprendre un dispositif interrogateur 62 optoélectronique comprenant par exemple un émetteur non représenté sur la figure, émettant un rayon laser dans la fibre optique 300. La fibre optique 300 comprend dans l'exemple illustré par la figure, une pluralité de noeuds capteurs 301 formant un réseau de Bragg, les noeuds capteurs étant chacun disposés à proximité de micro-actionneurs 500. Le dispositif interrogateur 62 peut comprendre également un récepteur non représenté sur la figure. Le dispositif interrogateur 62 peut être relié à un dispositif de traitement du signal ou "DSP" 63 selon le sigle issu de la terminologie anglaise. Avantageusement, le DSP 63 est relié à un dispositif de traitement et de diagnostic 64 apte à communiquer avec un système central de surveillance du système dans lequel il est intégré, permettant par exemple à un utilisateur de visualiser des alertes en cas de mauvais fonctionnement. Le DSP 63 permet notamment d'établir une comparaison entre les signaux reçus, représentatifs des signatures des équipements disposés à proximité des noeuds capteurs 301, et les gabarits de référence caractéristique de leur bon fonctionnement, afin de générer un signal représentatif du bon fonctionnement de ceux-ci. Les gabarits de référence peuvent par exemple être stockés dans une base de données 65 communiquant avec le DSP 63.

Avantageusement, le dispositif de surveillance 60 comporte des moyens de synchronisation de l'analyse comparative des signaux, avec les commandes d'actionnement des micro-actionneurs 500, représentées par un signal de commande Sc. Les moyens de synchronisation de l'analyse comparative des signaux peuvent par exemple être mis en oeuvre dans le DSP 63. Il est en effet possible de connaître à l'avance le ou les micro-actionneurs dont le bon fonctionnement doit être contrôlé, puisque les micro-actionneurs sont de manière typique commandés par un dispositif de commande.

Le mode de réalisation de l'analyse comparative entre la signature de référence mémorisée et la signature mesurée est d'un type quelconque connu, par exemple gabarit de la forme d'onde, ou traitement du signal numérique par transformée de Fourier, ou toute autre méthode connue.

Le mode de réalisation décrit présente l'avantage ne n'ajouter aucune complexité au système d'actionneur surveillé, tout en introduisant des organes supplémentaires très simples : la fibre optique 300 et l'unité de traitement 61. Le premier inconvénient de l'état de la technique antérieur précité, c'est-à-dire l'inconvénient lié à la complexification est ainsi résolu.

Le mode de réalisation décrit offre l'avantage d'un coût total réduit à celui du capteur à fibre ; le deuxième inconvénient de l'état de la technique antérieur précité, c'est-à-dire l'inconvénient lié au coût est ainsi résolu.

Le mode de réalisation décrit offre également l'avantage d'un encombrement total réduit à celui du capteur à fibre ; en particulier, l'encombrement déporté à proximité des actionneurs est réduit à la fibre ; le troisième inconvénient de l'état de la technique antérieur précité, c'est-à-dire l'inconvénient lié à l'encombrement est ainsi résolu. De la même manière, le quatrième inconvénient, c'est-à-dire l'inconvénient lié à la masse est résolu, en particulier dans la zone des actionneurs.

La consommation d'énergie pour l'ensemble du dispositif selon l'invention est minimisée par la nature multiplexée dans le temps des capteurs à réseaux de Bragg ; le cinquième inconvénient précité, c'est-à-dire l'inconvénient lié à la consommation est ainsi résolu.

Il est à remarquer que le seul mode de défaillance de chaque noeud d'un dispositif de surveillance 60 de nature optique tel que décrit ci-dessus, est la rupture totale ou partielle de la fibre optique 300. Une telle rupture n'a aucun effet fonctionnel sur le système dans lequel le dispositif de surveillance 60 est intégré. Ainsi, la pénalité en fiabilité offerte par le dispositif de surveillance 60 est nulle vis-à-vis du système dans lequel il est intégré. Le septième inconvénient de l'état de la technique antérieur précité, lié à la pénalité sur la fiabilité des actionneurs est ainsi résolu.

En outre, la nature optique des capteurs à réseau de Bragg rend ceux-ci immunes aux environnements thermiques et électriques, ainsi qu'aux chocs et aux vibrations, dès lors que ceux-ci sont convenablement maintenus dans le système dans lequel ils sont intégrés ; c'est-à-dire, par exemple dans le cas d'une aile d'aéronef : dans la mesure où ceux-ci sont noyés dans la structure de l'aile de manière appropriée. Le sixième inconvénient de l'état de la technique antérieur précité, lié à la susceptibilité est ainsi résolu.

## Revendications

1. Dispositif de surveillance (60) d'une pluralité de actionneurs (500), comprenant une fibre optique (300) comprenant une pluralité de capteurs (301), chaque capteur (301) étant disposé à proximité d'un micro-actionneur (500) et présentant des propriétés optiques variant en fonction d'au moins un paramètre physique, les évolutions du paramètre physique lors du fonctionnement du micro-actionneur (500) définissant sa signature, le dispositif de surveillance (60) comprenant également un dispositif interrogateur (62) pour réseau de fibre optique relié à la fibre optique (300) et comprenant au moins un émetteur et un récepteur, et des moyens de traitement (63) aptes à moduler la fréquence du signal optique émis par l'émetteur de manière à sélectionner le capteur (301) à proximité d'un micro-actionneur (500) donné, et **caractérisé en ce que** les moyens de traitement sont aptes à comparer le signal optique reçu, représentatif de la signature du micro-actionneur (500), à une signature caractéristique du bon fonctionnement du micro-actionneur (500).

2. Dispositif de surveillance (60) selon la revendication 1, **caractérisé en ce que** la fibre optique (300) est de type monomode, et les capteurs (301) sont constitués par un réseau de capteurs à fibre optique utilisant des réseaux d'interférence de Bragg, les moyens de traitement (63) comparant le signal optique reçu à une signature thermique du micro-actionneur (500).

3. Dispositif de surveillance (60) selon la revendication 1, **caractérisé en ce que** la fibre optique (300) est de type monomode, et les capteurs (301) sont formés par un réseau de Bragg, les moyens de traitement (63) comparant le signal optique reçu à une signature en pression du micro-actionneur (500).

4. Dispositif de surveillance (60) selon l'une quelconque des revendications précédentes, **caractérisé en ce que** les micro-actionneurs sont des micro-actionneurs à jet synthétique par plasma (100, 500).

5. Dispositif de surveillance (60) selon la revendication 4, **caractérisé en ce que** les micro-actionneurs à jet synthétique par plasma (100, 500) comprennent deux électrodes planaires (503, 505) réalisées de part et d'autre d'un substrat diélectrique (501).

6. Dispositif de surveillance (60) selon la revendication 5, **caractérisé en ce que** la fibre optique (300) est disposée dans la structure du substrat diélectrique (501).

7. Dispositif de surveillance (60) selon la revendication 5, **caractérisé en ce que** la fibre optique (300) est réalisée dans une cavité formée dans le substrat diélectrique, le capteur (301) étant réalisé par des couches déposées de matière formant les franges d'un réseau d'interférence.

8. Dispositif de surveillance (60) selon l'une quelconque des revendications 1 à 3, **caractérisé en ce que** les micro-actionneurs (500) sont des actionneurs de type piézo-électrique.

9. Dispositif de surveillance (60) selon l'une quelconque des revendications 1 à 3, **caractérisé en ce que** les micro-actionneurs (500) sont des micromoteurs.

10. Dispositif de surveillance (60) selon l'une quelconque des revendications 1 à 3, **caractérisé en ce que** les micro-actionneurs (500) sont des actionneurs à alliage à mémoire de forme.

11. Dispositif de surveillance (60) selon l'une quelconque des revendications 1 à 3, **caractérisé en ce que** les micro-actionneurs (500) sont des actionneurs de type muscle artificiel.

12. Dispositif de surveillance (60) selon l'une quelconque des revendications 1 à 3, **caractérisé en ce que** les micro-actionneurs (500) forment une population hétérogène d'actionneurs de différents types parmi les types suivants : micro-actionneurs à jet synthétique par plasma, actionneurs piézo-électriques, micromoteurs, actionneurs à alliage à mémoire de forme, muscles artificiels.

13. Dispositif de surveillance (60) selon l'une quelconque des revendications précédentes, **caractérisé en ce qu'**il comprend des moyens de synchronisation (63) de l'analyse comparative des signaux, avec les commandes d'actionnement des micro-actionneurs (500).

14. Aile d'aéronef, **caractérisée en ce qu'**un dispositif de surveillance (60) selon l'une quelconque des revendications précédentes surveille une pluralité d'actionneurs disposés au niveau de la surface de l'aile, les capteurs (301) étant disposés le long de la fibre optique (300) disposée dans la matière de l'aile, chacun des capteurs étant disposé à proximité d'un actionneur.

## Claims

1. A device (60) for monitoring a plurality of actuators (500), comprising an optical fibre (300) comprising a plurality of sensors (301), each sensor (301) being disposed within the vicinity of a micro-actuator (500) and having optical properties that vary as a function of at least one physical parameter, the evolutions of the physical parameter during operation of said micro-actuator (500) defining its signature, said monitoring device (60) further comprising an interrogator device (62) for an optical fibre network connected to said optical fibre (300) and comprising at least one transmitter and one receiver, and processing means (63) that are designed to modulate the frequency of the optical signal transmitted by said transmitter so as to select said sensor (301) within the vicinity of a given micro-actuator (500), and **characterised in that** said processing means are designed to compare the received optical signal representing the signature of said micro-actuator (500) with a signature that is characteristic of the correct operation of said micro-actuator (500).

2. The monitoring device (60) according to claim 1, **characterised in that** said optical fibre (300) is of the monomode type and said sensors (301) are constituted by a network of optical fibre sensors using Bragg interference networks, said processing means (63) comparing said received optical signal with a thermal signature of said micro-actuator (500).

3. The monitoring device (60) according to claim 1, **characterised in that** said optical fibre (300) is of the monomode type and said sensors (301) are formed by a Bragg network, said processing means (63) comparing said received optical signal with a pressure signature of said micro-actuator (500).

4. The monitoring device (60) according to any one of the preceding claims, **characterised in that** said micro-actuators are plasma synthetic jet micro-actuators (100, 500).

5. The monitoring device (60) according to claim 4, **characterised in that** said plasma synthetic jet micro-actuators (100, 500) comprise two planar electrodes (503, 505) realised either side of a dielectric substrate (501).

6. The monitoring device (60) according to claim 5, **characterised in that** said optical fibre (300) is disposed in the structure of said dielectric substrate (501).

7. The monitoring device (60) according to claim 5, **characterised in that** said optical fibre (300) is realised in a cavity that is formed in said dielectric substrate, said sensor (301) being realised by deposited layers of material forming the fringes of an interference network.

8. The monitoring device (60) according to any one of claims 1 to 3, **characterised in that** said micro-actuators (500) are piezoelectric type actuators.

9. The monitoring device (60) according to any one of claims 1 to 3, **characterised in that** said micro-actuators (500) are micro-motors.

10. The monitoring device (60) according to any one of claims 1 to 3, **characterised in that** said micro-actuators (500) are shape-memory alloy actuators.

11. The monitoring device (60) according to any one of claims 1 to 3, **characterised in that** said micro-actuators (500) are actuators of the artificial muscle type.

12. The monitoring device (60) according to any one of claims 1 to 3, **characterised in that** said micro-actuators (500) form a heterogeneous population of actuators of different types from the following types: plasma synthetic jet actuators, piezoelectric actuators, micro-motors, shape-memory alloy actuators and artificial muscles.

13. The monitoring device (60) according to any one of the preceding claims, **characterised in that** it comprises means (63) for synchronising the comparative analysis of the signals with the actuating commands of said micro-actuators (500).

14. An aircraft wing, **characterised in that** a monitoring device (60) according to any one of the preceding claims monitors a plurality of actuators disposed on the surface of said wing, said sensors (301) being disposed along said optical fibre (300) disposed in the material of said wing, each of said sensors being disposed within the vicinity of an actuator.

## Patentansprüche

1. Vorrichtung (60) zum Überwachen einer Mehrzahl von Aktuatoren (500), die eine Lichtleitfaser (300) mit einer Mehrzahl von Sensoren (301) umfasst, wobei jeder Sensor (301) in der Nähe eines Mikroaktuators (500) angeordnet ist und optische Eigenschaften hat, die in Abhängigkeit von wenigstens einem physikalischen Parameter variieren, wobei die Entwicklungen des physikalischen Parameters beim Betrieb des Mikroaktuators (500) dessen Signatur definieren, wobei die Überwachungsvorrichtung (60) auch eine Abfragevorrichtung (62) für ein mit der Lichtleitfaser (300) verbundenes Lichtleitfasernetz umfasst und wenigstens einen Sender und einen Empfänger umfasst, und Verarbeitungsmittel (63) zum Modulieren der Frequenz des vom Sender gesendeten optischen Signals, um den Sensor (301) in der Nähe eines gegebenen Mikroaktuators (500) auszuwählen, und **dadurch gekennzeichnet, dass** die Verarbeitungsmittel die Aufgabe haben, das die Signatur des Mikroaktuators (500) repräsentierende empfangene optische Signal mit einer Signatur zu vergleichen, die für einen korrekten Betrieb des Mikroaktuators (500) charakteristisch ist.

2. Überwachungsvorrichtung (60) nach Anspruch 1, **dadurch gekennzeichnet, dass** die Lichtleitfaser (300) vom Monomodentyp ist und die Sensoren (301) von einem Netzwerk von Lichtleitfasersensoren mit Braggschen Interferenznetzen gebildet werden, wobei die Verarbeitungsmittel (63) das empfangene optische Signal mit einer thermischen Signatur des Mikroaktuators (500) vergleichen.

3. Überwachungsvorrichtung (60) nach Anspruch 1, **dadurch gekennzeichnet, dass** die Lichtleitfaser (300) vom Monomodentyp ist und die Sensoren (301) von einem Braggschen Netz gebildet werden, wobei die Verarbeitungsmittel (63) das empfangene optische Signal mit einer Drucksignatur des Mikroaktuators (500) vergleichen.

4. Überwachungsvorrichtung (60) nach einem der vorherigen Ansprüche, **dadurch gekennzeichnet, dass** die Mikroaktuatoren Plasmasynthesestrahl-Mikroaktuatoren (100, 500) sind.

5. Überwachungsvorrichtung (60) nach Anspruch 4, **dadurch gekennzeichnet, dass** die Plasmasynthesestrahl-Mikroaktuatoren (100, 500) zwei planare Elektroden (503, 505) umfassen, die auf beiden Seiten des dielektrischen Substrats (501) vorgesehen sind.

6. Überwachungsvorrichtung (60) nach Anspruch 5, **dadurch gekennzeichnet, dass** die Lichtleitfaser (300) in der Struktur des dielektrischen Substrats (501) angeordnet ist.

7. Überwachungsvorrichtung (60) nach Anspruch 5, **dadurch gekennzeichnet, dass** die Lichtleitfaser (300) in einem Hohlraum realisiert ist, der in dem dielektrischen Substrat ausgebildet ist, wobei der Sensor (301) durch abgesetzte Materialschichten realisiert wird, die die Streifen eines Interferenznetzes bilden.

8. Überwachungsvorrichtung (60) nach einem der Ansprüche 1 bis 3, **dadurch gekennzeichnet, dass** die Mikroaktuatoren (500) piezoelektrische Aktuatoren sind.

9. Überwachungsvorrichtung (60) nach einem der Ansprüche 1 bis 3, **dadurch gekennzeichnet, dass** die Mikroaktuatoren (500) Mikromotoren sind.

10. Überwachungsvorrichtung (60) nach einem der Ansprüche 1 bis 3, **dadurch gekennzeichnet, dass** die Mikroaktuatoren (500) Aktuatoren aus einer Formgedächtnislegierung sind.

11. Überwachungsvorrichtung (60) nach einem der Ansprüche 1 bis 3, **dadurch gekennzeichnet, dass** die Mikroaktuatoren (500) Aktuatoren vom Typ eines künstlichen Muskels sind.

12. Überwachungsvorrichtung (60) nach einem der Ansprüche 1 bis 3, **dadurch gekennzeichnet, dass** die Mikroaktuatoren (500) eine heterogene Population von Aktuatoren verschiedener aus den folgenden Typen sind: Plasmasynthesestrahl-Aktuatoren, piezoelektrische Aktuatoren, Mikromotoren, Formgedächtnislegierung-Aktuatoren und künstliche Muskeln.

13. Überwachungsvorrichtung (60) nach einem der vorherigen Ansprüche, **dadurch gekennzeichnet, dass** sie Mittel (63) zum Synchronisieren der komparativen Analyse der Signale mit den Betätigungsbefehlen der Mikroaktuatoren (500) umfasst.

14. Luftfahrzeugflügel, **dadurch gekennzeichnet, dass** eine Überwachungsvorrichtung (60) nach einem der vorherigen Ansprüche mehrere Aktuatoren überwacht, die an der Oberfläche des Flügels angeordnet sind, wobei die Sensoren (301) entlang der in dem Material des Flügels vorgesehenen Lichtleitfaser (300) angeordnet sind, wobei jeder der Sensoren in der Nähe eines Aktuators angeordnet ist.
